(19) Europäisches Patentamt
European Patent Office
Office européen des brevets

(11) Veröffentlichungsnummer: **0 055 850**
**B1**

(12) # EUROPÄISCHE PATENTSCHRIFT

(45) Veröffentlichungstag der Patentschrift: **01.08.84**

(51) Int. Cl.³: **C 09 B 35/34** // D06P1/18, D21H1/46

(21) Anmeldenummer: **81110771.3**

(22) Anmeldetag: **24.12.81**

(54) **Disazoverbindungen, Verfahren zu ihrer Herstellung und ihre Verwendung.**

(30) Priorität: **07.01.81 DE 3100226**

(43) Veröffentlichungstag der Anmeldung: **14.07.82 Patentblatt 82/28**

(45) Bekanntmachung des Hinweises auf die Patenterteilung: **01.08.84 Patentblatt 84/31**

(84) Benannte Vertragsstaaten: **CH DE FR GB LI**

(56) Entgegenhaltungen:
**FR - A - 2 064 334**
**FR - A - 2 335 568**

**JOURNAL OF THE SOCIETY OF DYERS AND COLOURIST, Band 87, 1971, Seiten 348-349 S. FISICHELLA et al.: "Standard heats and standard entropies of dyeing of some quinazolone azo dyes" Seite 349**

(73) Patentinhaber: **HOECHST AKTIENGESELLSCHAFT, Postfach 80 03 20, D-6230 Frankfurt am Main 80 (DE)**

(72) Erfinder: **Pesenacker, Manfred, Dr., Brunnenstrasse 9, D-6232 Bad Soden am Taunus (DE)**
Erfinder: **Hunger, Klaus, Dr., Johann-Strauss-Strasse 35, D-6233 Kelkheim (Taunus) (DE)**

**EP 0 055 850 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind Disazoverbindungen der Formel (I)

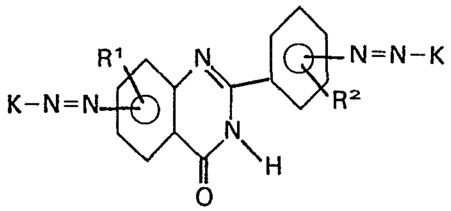

(I)

in der $R^1$ und $R^2$ unabhängig voneinander Wasserstoff, Chlor oder Brom, Methyl, Methoxy, Ethoxy oder Nitro und K Reste von gleichen oder verschiedenen Kupplungskomponenten bedeuten, die keine löslichmachenden Gruppen enthalten.

K ist insbesondere der Rest einer enolisierbaren Ketomethylenverbindung, wie beispielsweise eines Acetessiganilids oder N-Heterocyclus. Bevorzugte Reste K dieser Art entsprechen den Formeln (II) bis (VII)

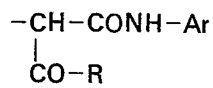

(II)

wobei R Methyl oder Phenyl ist und Ar ein Rest der Formel (IIa)

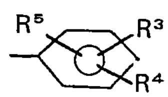

(IIa)

ist, in welcher $R^3$, $R^4$ und $R^5$, die gleich oder verschieden sind, Wasserstoff, Chlor, Brom, niederes Alkyl, niederes Alkoxy, niederes Alkanoylamino, Benzoylamino oder Nitro bedeuten, oder Ar ein Rest der Formeln (IIb) bis (IIg)

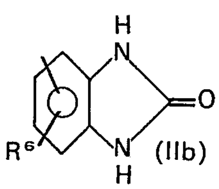

(IIb)

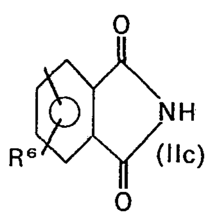

(IIc)

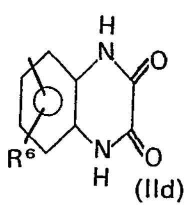

(IId)

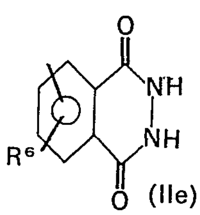

(IIe)

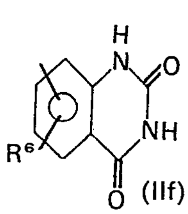

(IIf)

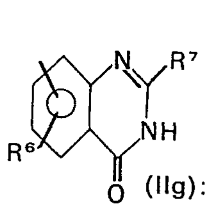

(IIg):

ist, in denen $R^6$ Wasserstoff, Chlor, Brom, niederes Alkyl, niederes Carboalkoxy oder Nitro, $R^7$ Phenyl, das ggf durch $R^6$ substituiert sein kann, ist;

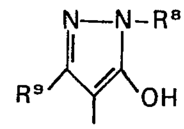

(III)

wobei $R^8$ Phenyl, Tolyl oder Chlorphenyl und $R^9$ Methyl, niederes Carboalkoxy, Carbonamido oder niederes Alkanoylamino bedeuten;

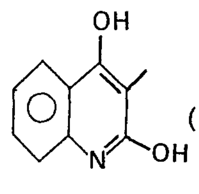

(IV)

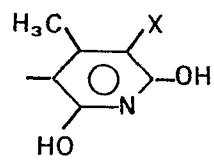

(V)

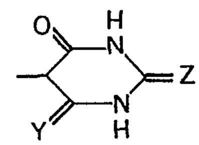

(VI)

wobei X Wasserstoff oder Cyan ist, Z Sauerstoff, Schwefel, =NH oder =NCN darstellt und Y Sauerstoff oder =NH bedeutet, und

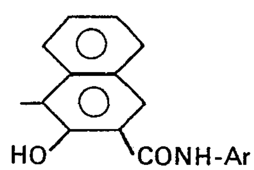

(VII)

wobei Ar die vorstehend genannten Bedeutungen hat, insbesondere für einen Rest der Formeln (IIa) und (IIb) steht.

Hier und im folgenden bedeutet die Bezeichnung nieder bei Alkyl und Alkoxy mit 1 bis 4 C-Atomen, bei Alkanoyl Reste mit (insgesamt) 2 bis 5 C-Atomen und bei Carboalkoxy Alkoxyreste mit 1 bis 4 C-Atomen.

Als Reste Ar der allgemeinen Formel (II) kommen beispielsweise in Betracht: Phenyl, o-, m-, p-Tolyl, o-, m-, p-Methoxyphenyl, o-, m-, p-Ethoxyphenyl, o-, m-, p-Chlorphenyl, o-, m-, p-Bromphenyl, o-, m-, p-Nitrophenyl, 2,4-Dimethylphenyl, 2,5-Dimethoxyphenyl, 2,3-Dichlorphenyl, 2,4-Dichlorphenyl, 2,5-Dichlorphenyl, 2,4,5-Trichlorphenyl, 2-Chlor-3-methylphenyl, 2-Chlor-4-methylphenyl, 2-Chlor-5-methylphenyl, 3-Chlor-2-methylphenyl, 4-Chlor-2-methylphenyl, 2-Methoxy-5-chlorphenyl, 2,5-Dimethoxy-4-chlorphenyl, 2,4-Dimethoxy-5-chlorphenyl, 2-Methoxy-4-chlor-5-methylphenyl, 4-Acetylaminophenyl oder 4-Benzoylaminophenyl.

Als Reste der Formel (IIb) kommen insbesondere Benzimidazol-2-on-5-yl, 7-Chlorbenzimidazol-2-on-5-yl und 7-Methylbenzimidazol-2-on-5-yl in Betracht.

Als Pyrazolonreste der Formel (III) kommen beispielsweise die Reste von 1-Phenyl-3-methylpyrazolon-(5), 1-(4'-Tolyl)-3-methylpyrazolon-(5), 1-Phenyl-3-carbomethoxypyrazolon-(5), 1-(4'-Tolyl)-3-carboethoxypyrazolon-(5) oder 1-Phenyl-3-acetylaminopyrazolon-(5) in Frage.

Die Erfindung betrifft weiterhin ein Verfahren zur Herstellung der Disazoverbindungen gemäss Formel (I), das dadurch gekennzeichnet ist, dass man eine oder mehrere Verbindungen der Formel (VIII)

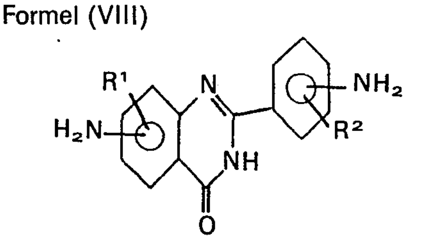

(VIII)

in der $R^1$ und $R^2$ die für Formel (I) genannte Bedeutung haben, bisdiazotiert und mit 2 Eq einer Kupplungskomponente KH, in der K die für Formel (I) genannte Bedeutung hat, kuppelt.

Die Erfindung betrifft weiterhin die Verwendung der erfindungsgemässen Disazoverbindungen als Farbmittel, insbesondere als Pigmente.

Als Diamine der Formel (VIII) können beispielsweise eingesetzt werden:

2-(4'-Aminophenyl)-6-amino-[3H]chinazolinon-(4)

2-(4'-Aminophenyl)-7-amino-[3H]chinazolinon-(4)

2-(3'-Aminophenyl)-6-amino-[3H]chinazolinon-(4)

2-(3'-Amino-4'-chlorphenyl)-6-amino-[3H]chinozolinon-(4)

2-(3'-Amino-4'-methylphenyl)-6-amino-[3H]chinazolinon-(4)

2-(3'-Amino-4'-methoxyphenyl)-6-amino-[3H]chinazolinon-(4)

2-(4'-Aminophenyl)-6-amino-7-chlor-[3H]chinazolinon-(4)

2-(4'-Amino-3'-nitrophenyl)-6-amino-[3H]chinazolinon-(4)

oder Gemische solcher Diamine.

Die Kupplung der Bisdiazoverbindungen der allgemeinen Formel (VIII) mit den Kupplungskomponenten KH geschieht in üblicher Weise, beispielsweise durch Vereinigung im wässerigen Medium. Hierbei kann eine einzige Kupplungskomponente oder ein Gemisch verschiedener Kupplungskomponenten eingesetzt werden.

Die Diaminoverbindungen der Formel (VIII) können nach bekannten Verfahren hergestellt werden, beispielsweise durch Kondensation entsprechend substituierter Nitro- oder Acylaminobenzoylchloride mit gegebenenfalls weiter substituierten Nitroanthranilsäureamiden in Gegenwart organischer Lösemittel und anschliessende Reduktion der Nitrogruppen bzw. Hydrolyse der Acylaminogruppen.

Anstelle von Nitroanthranilsäureamiden können auch Anthranilsäureamide verwendet werden. In diesen Fällen werden die Kondensationsprodukte nitriert und anschliessend katalytisch reduziert, wobei die Diaminoverbindungen entstehen.

Die Bisdiazotierung der Diamine der Formel (VIII) kann beispielsweise mit Alkalinitriten und einer Mineralsäure, aber auch mit Nitrosylschwefelsäure, erfolgen. Es kann hierbei als auch bei der anschliessenden Kupplung von Nutzen sein, einen Zusatz von oberflächenaktiven Mitteln zu verwenden, wie z.B. von nichtionogenen, anionenaktiven oder kationenaktiven Dispergiermitteln.

Diazotierung und Kupplung können auch in Gegenwart geeigneter organischer Lösemittel durchgeführt werden, wie z.B. Eisessig, niedere Alkanole, Dioxan, Formamid, Dimethylformamid, Dimethylsulfoxid, Pyridin oder N-Methylpyrrolidon. Zur Erzielung der vollen Farbstärke und einer besonders günstigen Kristallstruktur ist es oft zweckmässig, das Kupplungsgemisch einige Zeit zu erhitzen, beispielsweise zu kochen oder unter Druck bei Temperaturen über 100° C zu halten, gegebenenfalls in Gegenwart eines organischen Lösemittels wie Ethanol, o-Dichlorbenzol, Dimethylformamid, N-Methylpyrrolidon oder in Gegenwart von Harzseife.

Besonders reine und farbstarke Pigmente erhält man mit den erfindungsgemässen Produkten, wenn man nach der Kupplung die feuchten Presskuchen oder die getrockneten Pulver einer thermischen Nachbehandlung mit organischen Lösemitteln, wie Alkoholen, beispielsweise niederen Alkanolen, Pyridin, Eisessig, Dimethylformamid, N-Methylpyrrolidon, Dimethylsulfoxid, aromatischen Lösemitteln, wie Chlorbenzol, Dichlorbenzol oder Nitrobenzol unterwirft und eine Mahlung der Pigmente unter Zusatz von Mahlhilfsmitteln anschliesst.

Die Herstellung der Pigmente kann auch in Gegenwart eines Trägermaterials, beispielsweise von Schwerspat, erfolgen.

Die neuen Pigmente sind wasserunlöslich und unlöslich in den üblichen organischen Lösemitteln und eignen sich zur Herstellung von Druckfarben, Farblacken und Dispersionsanstrichfarben, zum Färben von Kautschuk, Kunststoffen und natürlichen oder synthetischen Harzen. Sie sind ferner geeignet für den Pigmentdruck auf Substraten, insbesondere Textilfasermaterialien oder anderen flächenförmigen Gebilden, wie beispielsweise Papier.

Die Pigmente können auch für andere Anwendungsgebiete, z.B. in fein verteilter Form zum Anfärben von Kunstseide aus Viskose oder Celluloseethern bzw. -ester, Polyolefinen, Polyamiden, Polyurethanen, Polyglykolterephthalat oder Polyacrylnitrilen in der Spinnmasse oder zum Färben von Papier verwendet werden.

Die Pigmente lassen sich in den genannten Medien gut verarbeiten. Die Färbungen weisen klare Nuancen, sehr gute Farbstärke und Migrationsechtheit und gute Lichtechtheit auf und sind gegen Hitzeeinwirkungen und den Einfluss von Chemikalien, vor allem Lösemitteln, beständig.

In den folgenden Beispielen beziehen sich Prozentangaben auf das Gewicht, sofern nichts anderes angegeben ist.

In den Beispielen 1 bis 4 entspricht das Produkt der Formel

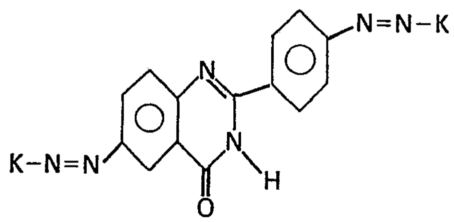

wobei die Bedeutung von K jeweils angegeben ist.

*Beispiel 1:*

18,9 g 2-(4'-Aminophenyl)-6-amino-[3H]chinazolinon-(4) werden in 250 ml Wasser und 80 ml 35%iger Salzsäure 2 h bei Raumtemperatur gut gerührt. Dann stellt man durch Zugabe von Eis auf 0° C und bisdiazotiert durch Zugabe einer Lösung von 12 g Natriumnitrit in 30 ml Wasser unter die Oberfläche der Mischung. Die Mischung wird 90 min bei 0-5° C gerührt, dann mit Wasser auf 600 ml Volumen gebracht. Der Überschuss an salpetriger Säure wird mit Amidosulfonsäure entfernt. Anschliessend klärt man nach Zugabe von 1 Teil Kieselgur. Gleichzeitig werden im Lösegefäss 36 g 5-Acetoacetylaminobenzimidazolon-(2) in 400 ml Wasser bei 18° C angerührt und durch Zusatz von 34 g 33%iger Natronlauge gelöst. Nach Zusatz von 1 g Kieselgur und 0,5 g Aktivkohle klärt man die Lösung und stellt mit Wasser auf 500 ml Volumen.

Dieses Filtrat läuft bei 18-20° C zu einem gut gerührten Gemisch aus 1 l Wasser, 250 g Natriumacetat, 18 g Eisessig und 3 g Oleylaminacetat, in Form einer 10%igen wässerigen Lösung, zu. Nach 30 min Nachrührzeit lässt man dann die geklärte Bisdiazoniumsalzlösung unter die Oberfläche der Suspension der Kupplungskomponente bei 20° C in etwa 1,5 h zulaufen. Man rührt 1 h bei Raumtemperatur nach, erhitzt dann die Pigmentsuspension auf 85-90° C, rührt 1 h bei dieser Temperatur, filtriert anschliessend und trocknet den gründlich mit Wasser gewaschenen Filterkuchen bei 65° C. Man erhält so 54,8 g eines orangefarbenen Pigmentes.

Zur Erzielung eines weichen Korns und einer besseren Dispergierbarkeit werden 25 g dieses Rohpigmentes in 500 g N-Methylpyrrolidon-(2) 3 h bei 140-145° C gerührt. Anschliessend filtriert man und wäscht das Filtergut bis zum klaren Filtratablauf mit N-Methylpyrrolidon-(2) und anschliessend mehrmals mit kleinen Portionen Ethanol. Nach der Trocknung erhält man so 23,7 g eines orangefarbenen Pigmentes der genannten Formel, in der K

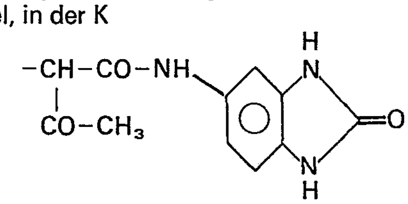

bedeutet, welches beim Einarbeiten in einen Alkydharz/Melaminharz-Klarlack gelborange Färbungen mit einwandfreier Überlackierechteit ergibt. Mit dem Produkt pigmentiertes PVC zeichnet sich durch eine einwandfreie Ausblutechtheit bei klarem und kräftigem Farbton aus. Die Lichtechtheiten im Druck, Lack und Kunststoff sind ebenfalls gut.

*Beispiel 2:*

18,9 g 2-(4'-Aminophenyl)-6-amino-[3H]chinazolinon-(4) werden in 250 ml Wasser mit 80 ml 31%iger Salzsäure 2 h bei Raumtemperatur gerührt. Dann stellt man durch Zugabe von Eis auf 0° C und bisdiazotiert durch Zugabe einer Lösung aus 12 g Natriumnitrit in 30 ml Wasser unter die Oberfläche der Mischung. Man rührt 1,5 h bei 0-5° C nach, stellt dann mit Wasser auf 600 ml Volumen und klärt nach Zusatz von 1 g Kieselgur. Anschliessend entfernt man den Überschuss an salpetriger Säure mit Amidosulfonsäure und versetzt die Lösung mit 3 g eines handelsüblichen Gemisches von langkettigen Alkyldimethylbenzylammoniumchloriden in Form einer 10%igen wässerigen Lösung.

28 g 1-(p-Tolyl)-3-methylpyrazolon-(5) werden in 400 ml Wasser unter Rühren eingetragen, auf 50° C erwärmt, durch Zugabe von 46 ml 31%iger Salzsäure gelöst und nach Zusatz von 2 g Kieselgur geklärt.

Zur Kupplung lässt man die 50° C warme Lösung des 1-(p-Tolyl)-3-methylpyrazolon-(5) im Verlauf von 1,5 h auf die Oberfläche der gut gerührten Lösung des Bisdiazoniumsalzes zulaufen. Die Temperatur im Kuppelgefäss wird dabei durch Zugabe von Eis unter 20° C gehalten. Man rührt nach, bis keine Diazoreaktion mehr nachweisbar ist.

Dann stellt man mit 4N-Natriumacetatlösung auf pH 5 und rührt weitere 30 min bei Raumtemperatur, erhitzt dann die Pigmentsuspension auf 80-85° C und rührt noch 30 min bei dieser Temperatur. Anschliessend kühlt man durch Zugabe von Eis auf 60° C und filtriert. Der Filterkuchen wird gut mit Wasser gewaschen und bei 65° C getrocknet. Man erhält 48 g eines orangefarbenen Pigmentes.

Zur Erzielung eines weicheren Korns werden 25 g dieses Rohpigmentes in 450 g N-Methylpyrrolidon-(2) bei 160-180° C 4 h gerührt, dann filtriert und mit N-Methylpyrrolidon-(2) bis zum klaren Filtratablauf und anschliessend mehrmals mit Ethanol in kleinen Portionen gewaschen.

Man erhält so 23,8 g eines kornweichen leuchtend orangen Pigmentes der genannten Formel, in der K

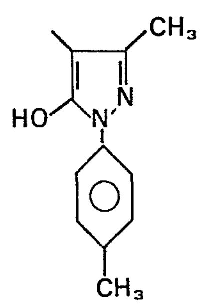

bedeutet.

Beim Einarbeiten in einen Alkydharz/Melaminharz-Klarlack ergeben sich orange Färbungen mit

einwandfreier Überlackierechtheit. Mit dem Produkt pigmentiertes PVC zeichnet sich neben einwandfreier Migrationsechtheit durch klare Nuancen aus. Die Lichtechtheiten im Lack, Druck und Kunststoff sind gut.

*Beispiel 3:*

18,9 g 2-(4'-Aminophenyl)-6-amino-[3H]chinazolinon-(4) werden in 250 ml Wasser mit 70 ml 31%iger Salzsäure 1 h bei Raumtemperatur gerührt. Dann kühlt man durch Zugabe von Eis auf 0° C und stellt mit Wasser auf 450 ml Volumen, bisdiazotiert durch Zugabe von 12 g Natriumnitrit in 50 ml Wasser und rührt 1 h bei 0-5° C. Dann zerstört man den Überschuss an Natriumnitrit durch Zugabe von Amidosulfonsäure, versetzt mit 1 g Bleicherde und klärt nach 5 min die Lösung.

31 g Acetessig-2-methylanilid werden in 250 ml Wasser mit 34 g 33%iger Natronlauge bei 18° C gelöst und nach Zusatz von 1 g Bleicherde geklärt. Das geklärte Filtrat läuft in 30 min zu einem gut gerührten Gemisch aus 1 l Wasser, 200 g Natriumacetat, 18 g Eisessig und 3 g eines Gemisches von langkettigen Alkyldimethylbenzylammoniumchloriden in Form einer 10%igen wässerigen Lösung zu. Die Suspension der Kupplungskomponente rührt man noch 20 min bei 18-20° C, dann läuft die geklärte Bisdiazoniumsalzlösung unter die Oberfläche der Suspension in ca. 1 h zu. Der pH-Wert fällt im Verlauf der Reaktion von 6,5 auf 5,2. Nach Beendigung der Diazoniumsalzzugabe rührt man die Pigmentsuspension noch 1 h bei Raumtemperatur, erhitzt dann auf 80° C und rührt 1 h bei dieser Temperatur. Durch Zugabe von Eis kühlt man auf 70° C, filtriert das Pigment und wäscht den Filterrückstand mit Wasser salzfrei. Nach der Trocknung bei 65° C werden 46,5 g eines rotstichiggelben Pigmentes erhalten.

25 g des Produkts werden in 500 ml N,N'-Dimethylformamid eingetragen und 1 h bei 140° C gerührt. Nach der Filtration wäscht man den Filterkuchen mit N,N'-Dimethylformamid bis zum klaren Filtratablauf und anschliessend zweimal mit jeweils 200 ml Ethanol. Nach der Trocknung bei 65° C erhält man 23,3 g eines leuchtend gelben Pigmentes der genannten Formel, in der K

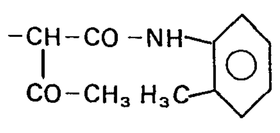

bedeutet.

Mit dem Pigment hergestellte Druckfarbe ergibt brillante gelbe Drucke mit ausgezeichneten Überlackier- und guten Lichtechteiten. Mit dem Pigment gefärbtes Weichpolyvinylchlorid zeigt klare Nuancen und besitzt gute Licht- und Migrationsechtheiten.

*Beispiel 4:*

18,9 g 2-(4'-Aminophenyl)-6-amino-[3H]-chinazolinon-(4) werden in 250 ml N,N'-Dimethylformamid gerührt. Nach Zugabe von 70 ml 31%iger Salzsäure stellt man durch Aussenkühlung auf 10° C und lässt dann bei 10° C eine Lösung von 11,5 g Natriumnitrit in 50 ml Wasser zutropfen. Nach 45 min zerstört man den Überschuss an Nitrit vorsichtig mit Amidosulfosäure.

Anschliessend tropft man im Verlauf von 30 min eine Lösung von 42 g 1-Acetoacetylamino-2,5-dimethoxy-4-chlorbenzol in 350 ml N,N'-Dimethylformamid zu. Die Temperatur im Kuppelgefäss wird während dieser Zeit durch Aussenkühlung bei 10° C gehalten. Nach 30 min gibt man dann eine Lösung von 50 g Natriumacetat in 400 ml Wasser zu, lässt die Temperatur auf 20-25° C ansteigen und rührt 1 h bei dieser Temperatur. Dann erhitzt man mit Wasserdampf auf 80° C und rührt 20 min bei 80° C. Anschliessend wird die Pigmentsuspension mit Eis auf 70° C abgekühlt und filtriert. Den Filterkuchen wäscht man zunächst gründlich mit Ethanol, dann mit ca. 600 ml Wasser in kleinen Portionen. Der Filterkuchen wird bei 65° C getrocknet. Man erhält 51,9 g eines orangen Pigmentes.

44 g desselben werden in 300 ml N,N'-Dimethylformamid eingetragen, 5 h bei 130-140° C gerührt und anschliessend filtriert. Der Filterkuchen wird bis zum klaren Filtratablauf mit Dimethylformamid, dann mit Ethanol gewaschen und bei 65° C getrocknet. Man erhält 36,4 g eines orangefarbenen Pigmentes der genannten Formel, in der K

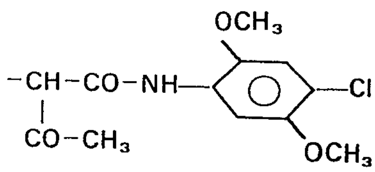

bedeutet.

Mit diesem Pigment gefärbte Druckpasten führen zu klaren rotstichig gelben Drucken mit guten Echtheiten.

Bei Verwendung des Pigmentes zu Kunststofffärbungen erhält man gleichfalls rotstichig gelbe Färbungen mit guten Migrations- und Lichtechtheiten.

Entsprechend Beispiele 1 bis 4 können die in der folgenden Tabelle genannten Produkte erhalten werden.

*Tabelle* →

**Patentansprüche**

1. Verbindungen der allgemeinen Formel (I)

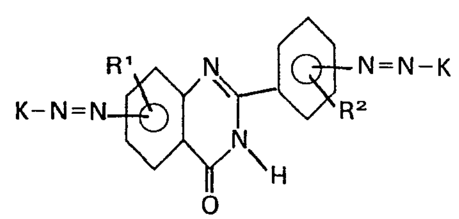

(I)

worin $R^1$ und $R^2$ Wasserstoff, Chlor oder Brom, Methyl, Methoxy, Ethoxy oder Nitro und K gleiche oder verschiedene Reste von enolisierbaren Ketomethylenverbindungen bedeuten, die keine wasserlöslichmachenden Gruppen enthalten.

| Bsp. Nr. | Diamin | Kupplungs-komponente | Nuance der Druckfarben |
|---|---|---|---|
| 5 | 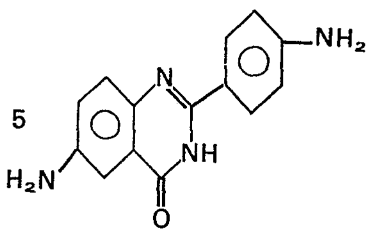 | 2,5-Dimethoxyacetessiganilid | rotstichig gelb |
| 6 | " | 2-Methoxyacetessiganilid | " |
| 7 | " | 2,4-Dimethoxy-5-chloracetessiganilid | " |
| 8 | " | 2-Methoxy-5-chloracetessiganilid | " |
| 9 | " | 2,4-Dimethylacetessiganilid | " |
| 10 | " | Acetessiganilid | gelb |

| Bsp. Nr. | Diamin | Kupplungs-komponente | Nuance der Druckfarben |
|---|---|---|---|
| 11 | 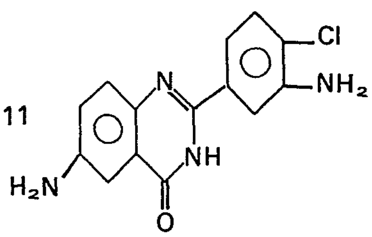 | 5-Acetoacetylaminobenzimid-azolon-(2) | rotstichig gelb |
| 12 | " | 2-Methoxyacetessiganilid | grünstichig gelb |
| 13 | " | 2,4-Dimethylacetessiganilid | " |
| 14 | " | 2,5-Dimethoxy-4-chloracetessiganilid | " |
| 15 | " | 2-Hydroxy-3-naphto-o-toluidid | rotstichig violett |
| 16 | 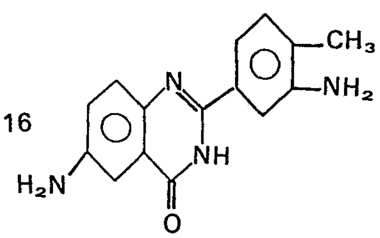 | 2,4-Dimethylacetessiganilid | rotstichig gelb |
| 17 | " | 2-Methoxyacetessiganilid | gelb |
| 18 | " | 2,4-Dimethoxy-5-chloracetessiganilid | rotstichig gelb |
| 19 | " | 2,5-Dimethoxy-4-chloracetessiganilid | " |
| 20 | 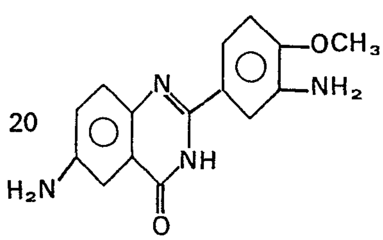 | 1-Phenyl-3-methylpyrazolon-(5) | gelborange |
| 21 | " | 5-Acetoacetylaminobenzimid-azolon-(2) | rotstichig gelb |

| Bsp. Nr. | Diamin | Kupplungs-komponente | Nuance der Druckfarben |
|---|---|---|---|
| 22 | 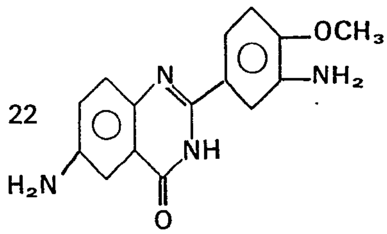 | 4-Amino-2-cynamino-6-hydroxy-pyrimidin | rotstichig gelb |
| 23 | 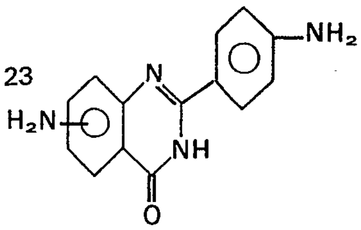 | 4-Amino-2,6-dihydroxypyrimidin | grünstichig gelb |
| 24 | " | 2-Methylacetessiganilid | gelb |
| 25 | " | 2-Methoxyacetessiganilid | rotstichig gelb |
| 26 | " | 4-Methoxyacetessiganilid | " |
| 27 | " | 2-Methyl-5-chloracetessiganilid | " |
| 28 | " | Acetessiganilid | " |
| 29 | " | 1-(4'-Tolyl)-3-methylpyrazolon-(5) | orange |
| 30 | " | 4-Methyl-6-hydroxypyridon-(2) | gelbstichig rot |
| 31 | " | 2-Methoxy-5-chloracetessiganilid | orange |
| 32 | " | 2-Hydroxy-3-naphtho-o-phenetidid | violett |
| 33 | 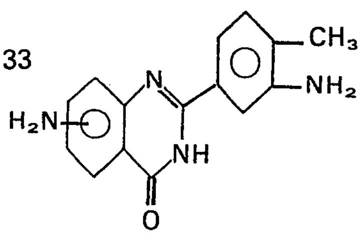 | 2-Methoxyacetessiganilid | grünstichig gelb |
| 34 | 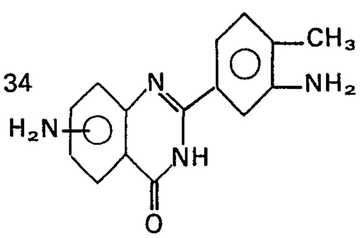 | 2,4-Dimethylacetessiganilid | grünstichig gelb |
| 35 | " | 4-Methylacetessiganilid | gelb |
| 36 | " | 4-Chloracetessiganilid | gelb |
| 37 | " | 2,5-Dimethoxy-4-chloracetessiganilid | rotstichig gelb |
| 38 | " | 6-Acetoacetylaminochinazolinon-dion-(2,4) | " |
| 39 | " | 5-Cyano-6-hydroxy-4-methyl-pyridon-(2) | orange |
| 40 | " | 2-Hydroxy-3-naphtho-o-phenetidid | bordeaux |

| Bsp. Nr. | Diamin | Kupplungskomponente | Nuance der Druckfarben |
|---|---|---|---|
| 41 | 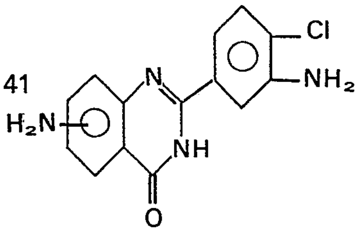 | 2,4-Dimethylacetessiganilid | grünstichig gelb |
| 42 | " | Acetessiganilid | " |
| 43 | " | 2-Methoxyacetessiganilid | gelb |
| 44 | " | 4-Methoxyacetessiganilid | rotstichig gelb |
| 45 | " | 2,5-Dimethoxy-4-chloracetessiganilid | " |
| 46 | " | 5-Acetoacetylaminobenzimidazolon-(2) | " |
| 47 | " | 5-Cyano-6-hydroxy-4-methylpyridon-(2) | orange |
| 48 | 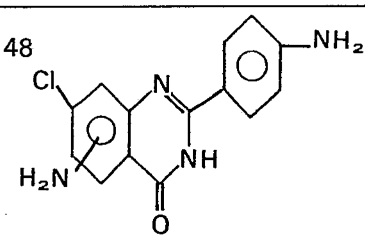 | 2-Methylacetessiganilid | rotstichig gelb |
| 49 | " | 2-Methoxyacetessiganilid | " |
| 50 | " | 4-Methoxyacetessiganilid | " |
| 51 | " | 5-Acetoacetylaminobenzimidazolon-(2) | " |
| 52 | " | 2,5-Dimethoxy-4-chloracetessiganilid | gelborange |
| 53 | " | 2-Hydroxy-3-naphth-p-anisidid | maronviolett |
| 54 | 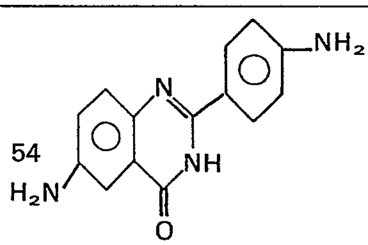 | 7-Chlor-5-acetylaminobenzimidazolon-(2) | rotstichig gelb |
| 55 | " | 6-Methoxy-5-acetoacetylaminobenzimidazolon-(2) | " |
| 56 | " | 7-Methyl-6-acetoacetylaminochinoxalin | " |
| 57 | 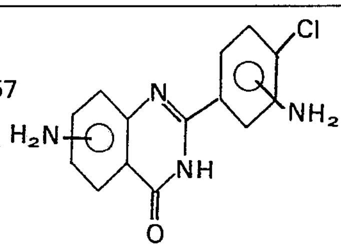 | 5-Acetoacetylaminobenzimidazolon-(2) | gelb |

Wenn in der Formel des Diamins die Stellung der Aminogruppe nicht fixiert ist, so bedeutet dies, dass die entsprechende Aminogruppe durch Nitrierung und Reduktion eingeführt wurde.

2. Verbindungen nach Anspruch 1, worin K eine Gruppe der Formeln (II) bis (VII) bedeutet

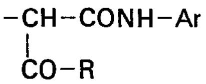
(II)

wobei R Methyl oder Phenyl ist und Ar ein Rest der Formel (IIa)

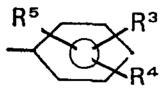
(IIa)

ist, in welcher $R^3$, $R^4$ und $R^5$, die gleich oder verschieden sind, Wasserstoff, Chlor, Brom, niederes Alkyl, niederes Alkoxy, niederes Alka' oylamino, Benzoylamino oder Nitro bedeuten, ( der Ar ein Rest der Formeln (IIb) bis (IIg)

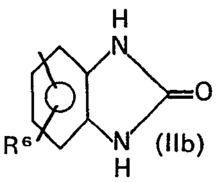
(IIb)

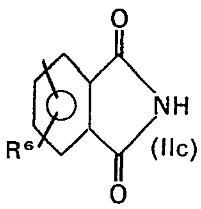
(IIc)

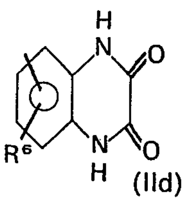
(IId)

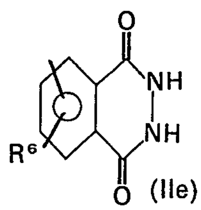
(IIe)

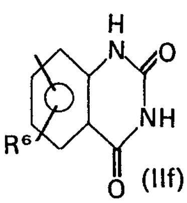
(IIf)

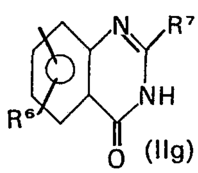
(IIg):

ist, in denen $R^6$ Wasserstoff, Chlor, Brom, niederes Alkyl, niederes Carboalkoxy oder Nitro, $R^7$ Phenyl, das gegebenenfalls durch $R^6$ substituiert sein kann, ist;

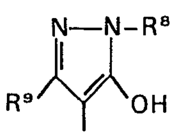
(III)

wobei $R^8$ Phenyl, Tolyl oder Chlorphenyl und $R^9$ Methyl, niederes Carboalkoxy, Carbonamido oder niederes Alkanoylamino bedeuten;

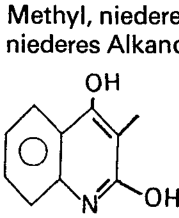
(IV)

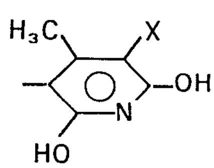
(V)

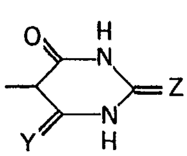
(VI)

wobei X Wasserstoff oder Cyan ist, Z Sauerstoff, Schwefel, =NH oder =NCN darstellt und Y Sauerstoff oder =NH bedeutet, und

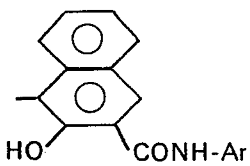
(VII)

wobei Ar die vorstehend genannten Bedeutungen hat, insbesondere für einen Rest der Formeln (IIa) und (IIb) steht.

3. Verbindungen nach den Ansprüchen 1 und 2, worin $R^1$ Wasserstoff oder Chlor und $R^2$ Wasserstoff, Chlor, Methyl oder Methoxy bedeutet.

4. Verbindungen nach einem oder mehreren der Ansprüche 1 bis 3, worin K eine Gruppe der Formel

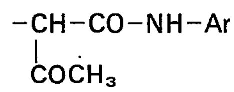

bedeutet, in der Ar für

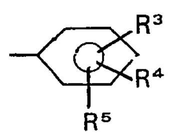
oder
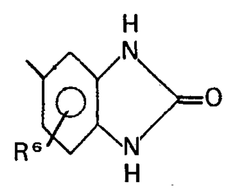

steht, worin $R^3$, $R^4$ und $R^5$, die gleich oder verschieden sind, sowie $R^6$ Wasserstoff, Methyl, Methoxy oder Chlor bedeuten.

5. Verbindungen nach einem oder mehreren der Ansprüche 1 bis 4, worin $R^1$ und $R^2$ Wasserstoff sind und K eine Gruppe der Formel

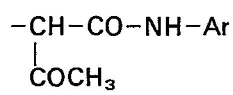

ist, in der Ar 5-Benzimidazol-2-onyl, 2-Methoxyphenyl, 2,4-Dimethoxy-5-chlorphenyl, 2,5-Dimethoxy-4-chlorphenyl oder 2,4-Dimethoxyphenyl ist.

6. Verfahren zur Herstellung der Verbindungen gemäss Anspruch 1, dadurch gekennzeichnet, dass man 1 Eq der durch Bisdiazotierung des Diamins der Formel (VII) erhaltenen Bisdiazoniumverbindung

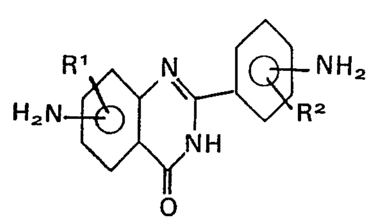
(VIII)

worin $R^1$ und $R^2$ die im Anspruch 1 angegebenen Bedeutungen haben, mit 2 Eq einer oder mehrerer Verbindungen der Formel K−H kuppelt, wobei K die im Anspruch 1 angegebene Bedeutung hat.

7. Verwendung der Verbindungen gemäss einem oder mehreren der Ansprüche 1 bis 5 als Pigmente.

8. Verwendung der Verbindungen gemäss einem oder mehreren der Ansprüche 1 bis 5 zum Färben bzw. Bedrucken von Kunststoffen, natürlichen und synthetischen Harzen, Kautschuk, Papier, Viskoseseide, Celluloseestern bzw. -ethern, Polyolefinen, Polyacrylnitril oder Polyglykolterephthalestern sowie zur Herstellung von Druckfarben, Lackfarben oder Dispersionsanstrichfarben.

## Claims

1. Compounds of the general formula (I)

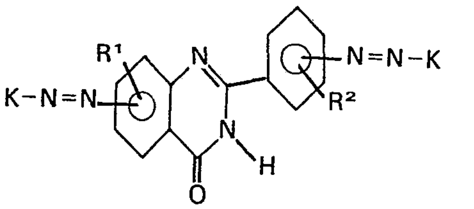
(I)

which contain no groups producing water-solubility, in which $R^1$ and $R^2$ are hydrogen, chlorine or bromine, methyl, methoxy, ethoxy or nitro and K being identical or different substituents of enolisable keto methylene compounds.

2. Compounds according to Claim 1, in which K represents a group of the formulae (II) to (VII)

$$\begin{array}{l}-CH-CONH-Ar \\ \;| \\ \;CO-R\end{array} \qquad (II)$$

in which R is methyl or phenyl and Ar is a substituent of the formula (IIa)

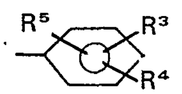
(IIa)

in which $R^3$, $R^4$ and $R^5$, being identical or different, represent hydrogen, chlorine, bromine, lower alkyl, lower alkoxy, lower alkanoylamino, benzoylamino or nitro or Ar is a substituent of the formulae (IIb) to (IIg)

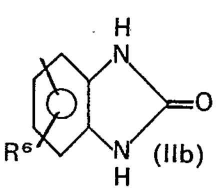
(IIb)

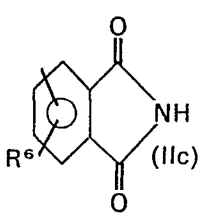
(IIc)

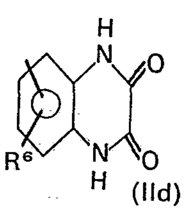
(IId)

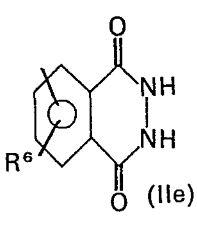
(IIe)

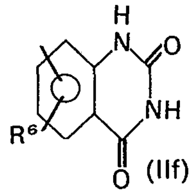
(IIf)

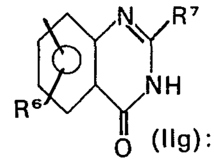
(IIg):

in which $R^6$ is hydrogen, chlorine, bromine, lower alkyl, lower carbalkoxy or nitro, $R^7$ is phenyl, optionally substituted by $R^6$;

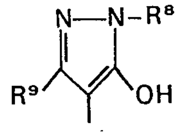
(III)

in which $R^8$ represents phenyl, tolyl or chlorophenyl and $R^9$ is methyl, lower carbalkoxy, carbonamido or lower alkanoylamino;

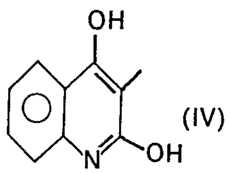
(IV)

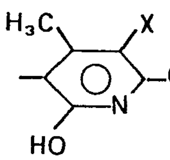
(V)

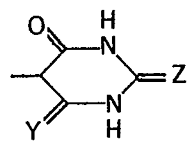
(VI)

in which X is hydrogen or cyano, Z represents oxygen, sulfur, =NH or =NCN and Y represents oxygen or =NH; and

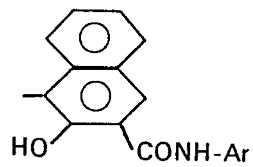
(VII)

in which Ar has the meaning as cited before, particularly is a substituent of the formulae (IIa) and (IIb).

3. Compounds according to Claims 1 and 2, in which $R^1$ represents hydrogen or chlorine and $R^2$ hydrogen, chlorine, methyl or methoxy.

4. Compounds according to one or more of the Claims 1 to 3, in which K represents a group of the formula

$$\begin{array}{l}-CH-CO-NH-Ar \\ \;| \\ \;COCH_3\end{array}$$

in which Ar stands for

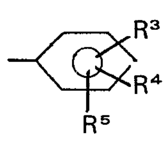

or

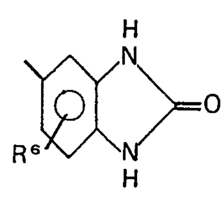

in which $R^3$, $R^4$ and $R^5$ which are identical or different as well as $R^6$ represent hydrogen, methyl, methoxy or chlorine.

5. Compounds according to one or more of the Claims 1 to 4, in which $R^1$ and $R^2$ are hydrogen and K is a group of the formula

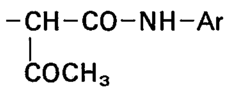

in which Ar is 5-benzimidazol-2-only, 2-methoxyphenyl, 2,4-dimethoxy-5-chlorophenyl, 2,5-dimethoxy-4-chlorophenyl or 2,4-dimethoxyphenyl.

6. Process for the preparation of the compounds according to Claim 1, characterized in that 1 Eq of the bisdiazonium compound

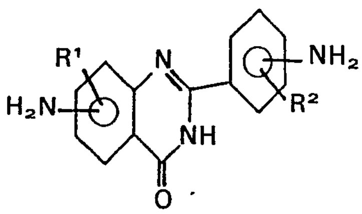

(VIII)

which is obtained by bisdiazotation of the amine of the formula (VIII), in which $R^1$ and $R^2$ have the meaning as mentioned in Claim 1, is coupled with 2 Eq of one or more of the compounds of the formula K−H, in which K has the meaning as mentioned in Claim 1.

7. Use of the compounds according to one or more of the Claims 1 to 5 as pigments.

8. Use of the compounds according to one or more of the Claims 1 to 5 for dyeing and printing respectively of plastics, natural and synthetic resins, rubber, paper, rayon made from viscose, cellulose esters and ethers respectively, polyolefins, polyacrylonitrile or polyglycole terephthalate ester, and for the preparation of printing inks, lacquers or dispersion paintings.

## Revendications

1. Composés répondant à la formule générale (I)

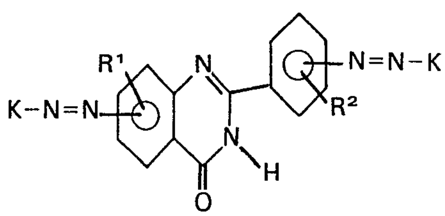

(I)

dans laquelle $R^1$ et $R^2$ représentent chacun l'hydrogène, le chlore, le brome, un radical méthyle, un radical méthoxy, un radical éthoxy ou un radical nitro, et les K représentent des radicaux, identiques ou différents, de composés cétométhyléniques énolisables qui ne portent pas de radicaux hydrosolubilisants.

2. Composés selon la revendication 1, dans lesquels K représente un radical répondant à l'une des formules (II) à (VII)

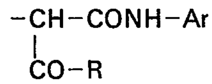

(II)

dans laquelle R représente un radical méthyle ou phényle et Ar un radical répondant à la formule (IIa)

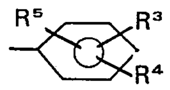

(IIa)

dans laquelle $R^3$, $R^4$ et $R^5$ représentent chacun, indépendamment les uns des autres, l'hydrogène, le chlore, le brome, un alkyle inférieur, un alcoxy inférieur, un alcanoylamino inférieur, un benzoylamino ou un nitro, ou Ar représente un radical répondant à l'une des formules (IIb) à (IIg)

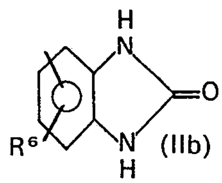

(IIb)

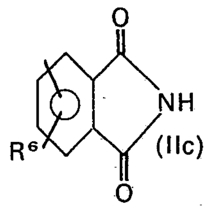

(IIc)

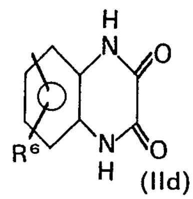

(IId)

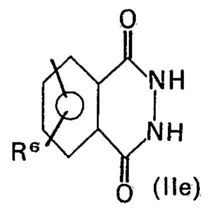

(IIe)

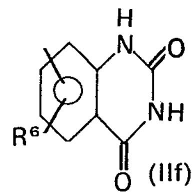

(IIf)

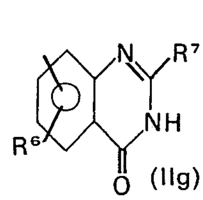

(IIg):

dans lesquelles $R^6$ représente l'hydrogène, le chlore, le brome, un alkyle inférieur, un alcoxycarbonyle inférieur ou un nitro et $R^7$ représente un phényle éventuellement porteur d'un substituant $R^6$;

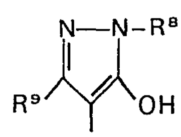

(III)

dans laquelle $R^8$ représente un phényle, un tolyle ou un chlorophényle et $R^9$ représente un méthyle, un alcoxycarbonyle inférieur, un carbamoyle ou un alcanoylamino inférieur;

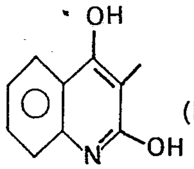
(IV)

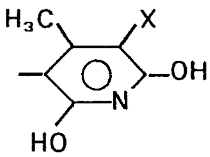
(V)

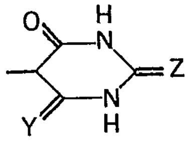
(VI)

dans lesquelles X représente l'hydrogène ou un cyano, Z représente l'oxygène, le soufre, =NH ou =NCN, et Y représente l'oxygène ou =NH, et

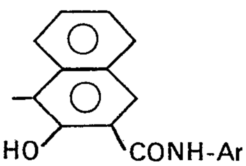
(VII)

dans laquelle Ar a la signification indiquée plus haut, en particulier désigne un radical de formules (IIa) et (IIb).

3. Composés selon les revendications 1 et 2, dans lesquels $R^1$ représente l'hydrogène ou le chlore et $R^2$ représente l'hydrogène, le chlore, un radical méthyle ou un radical méthoxy.

4. Composés selon l'une des revendications 1 à 3, dans lesquels K représente un radical répondant à la formule

$$-\underset{\substack{|\\ COCH_3}}{CH}-CO-NH-Ar$$

dans laquelle Ar représente un radical répondant à l'une des formules

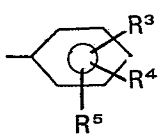
ou
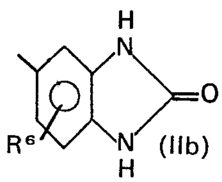
(IIb)

dans lesquelles $R^3$, $R^4$ et $R^5$, qui sont identiques ou différents, ainsi que $R^6$ représentent chacun l'hydrogène, un radical méthyle, un radical méthoxy ou le chlore.

5. Composés selon l'une des revendications 1 à 4, dans lesquels $R^1$ et $R^2$ représentent chacun l'hydrogène et K représente un radical répondant à la formule:

$$-\underset{\substack{|\\ COCH_3}}{CH}-CO-NH-Ar$$

dans laquelle Ar représente un radical oxo-2 benzimidazolyle-5, méthoxy-2 phényle, diméthoxy-2,4 chloro-5 phényle, diméthoxy-2,5 chloro-4 phényle ou diméthoxy-2,4 phényle.

6. Procédé de préparation des composés selon la revendication 1, procédé caractérisé en ce qu'on copule 1 Eq du composé de bisdiazonium obtenu par bis-diazotation de la diamine répondant à la formule (VIII)

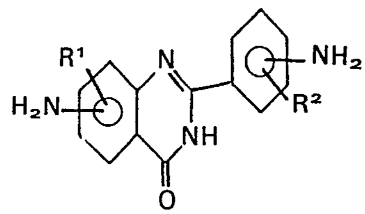
(VIII)

dans laquelle $R^1$ et $R^2$ ont les significations données à la revendication 1, avec 2 Eq d'un ou de plusieurs composés répondant à la formule K−H dans laquelle K a la signification donnée à la revendication 1.

7. Application des composés selon l'une ou plusieurs des revendications 1 à 5 en tant que pigments.

8. Applications des composés selon l'une des revendications 1 à 5 à la teinture ou à l'impression de matières plastiques, de résines naturelles ou synthétiques, du caoutchouc, du papier, de la rayonne viscose, d'esters ou d'éthers de la cellulose, de polyoléfines, du polyacrylonitrile ou de poly-(téréphtalates de glycols), ainsi qu'à la préparation d'encres d'imprimerie, de vernis colorés ou de peintures-dispersions.